# EUROPEAN PATENT SPECIFICATION

(11) **EP 2 806 040 B1**
(45) Date of publication and mention of the grant of the patent: **18.04.2018**
(21) Application number: 14168707.9
(22) Date of filing: 16.05.2014
(51) Int. Cl.: C21D 8/06, C21D 1/55, C22C 38/46, C22C 38/00

(54) **A martensitic alloy component and process of forming a martensitic alloy component**
Martensitische Legierungskomponente und Verfahren zur Herstellung einer martensitischen Legierungskomponente
Composant d'alliage martensitique et procédé de formation d'un tel composant

(30) Priority: 21.05.2013 US 201313898720
(43) Date of publication of application: 26.11.2014
(73) Proprietor: General Electric Company, Schenectady, NY 12345 (US)
(72) Inventor: Ridge, Jeremy, Greenville, SC 29615-4614 (US); Majka, Ted F., Greenville, SC 29615-4614 (US); Wood, John, Greenville, SC 29615 (US)
(74) Representative: Foster, Christopher Michael

(56) References cited:
- EP-A1- 2 110 454
- EP-A1- 2 169 082
- EP-A1- 2 465 952
- DE-A1- 10 156 999
- JP-A- H0 853 714
- JP-A- H09 118 950
- JP-A- H10 195 589
- JP-A- 2001 234 277
- JP-A- 2005 344 149
- US-A1- 2012 298 262

## Description

### FIELD OF THE INVENTION

The present invention is directed to martensitic alloys, articles including martensitic alloys, and processes of forming alloys. More specifically, the present invention is directed to a reduced nickel-chromium martensitic alloy and a process of forming a reduced nickel-chromium martensitic alloy.

### BACKGROUND OF THE INVENTION

Wind turbines are exposed to significant operational stresses from wind, rotational forces and the weight of a plurality of blades. The operational stresses are often amplified by environmental temperatures with extremes depending on geographical location. The materials used for the components of the wind turbines must be able to withstand operating stresses and strains throughout the range of temperatures.

Wind turbines have a main shaft that transmits power from a rotor to a generator. As wind turbines increase their outputs from 1.5 and 2.5 megawatts (MW) to 3, 4, 5, and 6 MW, the size and required properties of the wind turbine drive shaft increases. In addition, the loads from gearbox components, such as planet gear carriers, are typically too high for conventional ductile iron grades (ferritic/pearlitic grades). Forged/hardened steel is the material of choice for gearbox components and drive shafts having sizes greater than 3 tons. This shaft is typically machined out of a steel forging. The material of the shaft is usually quenched-tempered high-strength low-alloy steel with critical fatigue properties. A common alloy currently used for these large wind turbine components is 34CrNiMo6 steel. The nickel and chromium provide a desirable hardenability of the alloy. Although 34CrNiMo6 steel provides desired hardenability and fracture appearance transition temperature (FATT), the nickel and chromium used in 34CrNiMo6 steel is expensive, increasing the price of wind turbines and replacement shafts.

A desired feature for wind turbine components is a FATT of -40°C (-40°F). The FATT is the temperature at which the fracture surface of a material is 50% low energy brittle cleavage and 50% high energy ductile fibrous. Both a composition of the material as well as the processes for forming and heat treating the material affect FATT. FATT is important because it represents the temperature above which brittle fracture will not occur. The lower the FATT, the greater the toughness of the material.

Martensitic stainless steels, such as 34 CrNiMo6 steel, having excellent strength, low brittle to ductile transition temperature, and good hardening characteristics in thick sections have long been used as turbine shaft materials. Decreasing the amount of Ni and Cr in the alloy decreases the hardenability, which reduces the amount of martensite that forms in the material. Reducing the amount of martensite has the undesirable consequence of increasing the FATT of the material.

A martensitic alloy and a method of forming an inexpensive martensitic alloy having reduced amounts of nickel and chromium and not suffering from the above drawbacks would be desirable in the art.

EP 2110454 discloses a forging steel characterized in that prescribed composition of components must be satisfied. In particular, any one of the below-mentioned (I)-(IV) need to be complied with in regard to dissolved Ca and dissolved Mg. (I) Dissolved Ca: 2-500 ppb (meaning "mass ppb" hereafter) and dissolved Mg: 0.04-5 ppm (meaning "mass ppm" hereafter); (II) Dissolved Ca: 2-100 ppb and dissolved Mg: 5-10 ppm; (III) Dissolved Ca: 2 ppb or less (0% not included) and dissolved Mg: 0.04-5 ppm; (IV) Dissolved Ca: 2-500 ppb and dissolved Mg: 0.04 ppm or less (0% not included).

EP 2169082 discloses a forged product with a steel composition containing 0.15-0.75% C, Si, Mn, Ni, Cr, Mo, V and A1 and crankshaft manufactured from it. When the density (Dₒ) of the inclusion whose major axis exceeds 5 µm observed in the axis position of a section perpendicular to the axial direction of a forged product is made 70 nos/cm² or below and the radius of the forged product is made R, the ratio of the density (D_{R}) of the inclusions whose major axis exceeds 5 µm observed in the R/3 position from the axis position toward the radial direction and the density Do satisfies an inequality 0.5≤D_{R}/Dₒ≤1.50.

JP 2001 234277 discloses a high strength steel improved in fatigue characteristics having tensile strength of >=1,500 MPa having a composition containing, by weight, 0.2 to 1.3% C, 0.01 to 3.0% Si and 0.2 to 3.0% Mn and, if required, containing other elements, controlling the carbon equivalent (ceq) shown by the following formula to >=0.8, and also, reducing the amount of hydrogen released when heated from room temperature to 500 deg.C to <+0.3 ppm: Ceq=C%+Si%/15+Mn%/10+Cr%/11+Mo%/7+V%/5+Ni%/45+Cu%/45.

### BRIEF DESCRIPTION OF THE INVENTION

In an exemplary embodiment of the present disclosure, a martensitic alloy component includes by weight:
0.38% to 0.43% C;
0.15% to 0.30% Si;
1.00% to 1.25% Mn;
0.75% to 0.90% Ni;
1.00% to 1.30% Cr;
0.25% to 0.35% Mo;
0.05% to 0.12% V;
up to 0.015% S;
up to 0.015% P;
up to 0.15% Cu; and
balance iron and incidental impurities.

The component has a hardenability corresponding to an ideal diameter of greater than 10 inches (25.4 cm).

In another embodiment of the present disclosure, a process of forming a reduced nickel-chromium martensitic alloy component includes forging the reduced nickel-chromium alloy component including by weight:
0.38% to 0.43% C;
0.15% to 0.30% Si;
1.00% to 1.25% Mn;
0.75% to 0.90% Ni;
1.00% to 1.30% Cr;
0.25% to 0.35% Mo;
0.05% to 0.12% V;
up to 0.015% S;
up to 0.015% P;
up to 0.15% Cu; and
balance iron and incidental impurities.

After forging, the reduced nickel-chromium martensitic alloy component is austenitized, quenched and tempered. The tempered forged alloy has a hardenability corresponding to an ideal diameter of greater than 10 inches (25.4 cm).

Other features and advantages of the present invention will be apparent from the following more detailed description of the preferred embodiment, taken in conjunction with the accompanying drawings which illustrate, by way of example, the principles of the invention.

### DETAILED DESCRIPTION OF THE INVENTION

Provided is an exemplary reduced nickel-chromium alloy component having a plurality of predetermined properties and a process of forming the reduced nickel-chromium alloy component having a plurality of predetermined properties. Embodiments of the present disclosure, in comparison to methods and products not utilizing one or more features disclosed herein, decrease nickel percentage, decrease chromium percentage, increase carbon percentage, increase manganese percentage, decrease material cost, maintain or increase martensite percentage, maintain or decrease fracture appearance transition temperature (FATT), or a combination thereof.

In one embodiment, the disclosure includes a process for producing the main shaft for a wind turbine from a martensitic alloy, though it should be understood that the invention is also well suited for the production of a wide variety of components from martensitic alloy compositions. Other non-limiting examples include automotive components, such as turbine shafts, axles, and various other components used in the energy, automotive, railroad, construction, mining and agricultural industries. Such components are well known in the art and therefore require no further description.

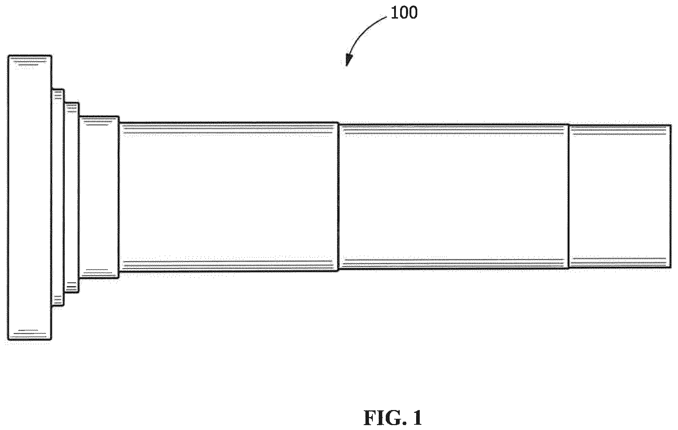

With reference to FIG. 1, the shaft 100 is represented as having a tubular shape with a flange formed at one end, though it can be appreciated that FIG. 1 is merely a schematic representation and different configurations for the shaft 100 are also within the scope of the invention. Although the shaft 100 shown in FIG. 1 includes a plurality of segments, the shaft 100 may also be formed of a unitary piece. The shaft 100 may be solid or hollow or a combination of solid and hollow components. The shaft 100 has an axisymmetric geometry with respect to the longitudinal axis of rotation of the shaft 100. For use in the wind turbine 10, the main shaft 100 will have an outer diameter well in excess of 20 inches (about 50 cm), and more typically in excess of 24 inches (about 60 cm), with a typical range being about 25 to 60 inches (about 63 to about 152 cm), though lesser and greater diameters are also foreseeable. Other aspects of the shaft 100, including its installation in wind turbines and the operation of the wind turbines, are otherwise known in the art, and therefore will not be discussed here in any detail.

The martensitic alloy, according to the present disclosure, includes the composition shown in Table 1.

**Table 1**

| wt% | Broad Range | Alternate Range | Alternate Range |
|---|---|---|---|
| C | 0.38-0.43 | 0.38-0.43 | 0.39-0.41 |
| Si | 0.15-.030 | 0.15-.030 | 0.20-.025 |
| Mn | 1.00-1.25 | 1.05-1.25 | 1.10-1.17 |
| Ni | 0.75-0.90 | 0.75-0.90 | 0.78-0.85 |
| Cr | 1.00-1.30 | 1.00-1.30 | 1.10-1.20 |
| Mo | 0.25-0.35 | 0.25-0.35 | 0.27-0.32 |
| V | 0.05-0.12 | 0.05-0.12 | 0.07-0.11 |
| S | <0.015 | <0.015 | <0.015 |
| P | <0.015 | <0.015 | <0.015 |
| Cu | <0.15 | <0.15 | <0.15 |
| Fe | Bal | Bal | Bal |

A component formed from the composition, according to the present disclosure, includes a hardenability corresponding to an ideal diameter of greater than about 10 inches (25.4 cm) or 10 to 18 inches (25.4 to 45.72 cm) or 11 to 12 inches (27.94 to 30.48 cm) or 13 to 14 inches (33.02 to 35.56 cm) or any suitable combination, subcombination, range, or sub-range within. In one embodiment, the component has a hardenability corresponding to an ideal diameter of about 11.4 inches (28.96 cm). In another embodiment, the component has a hardenability corresponding to an ideal diameter of about 13.3 inches (33.78cm). Hardenability corresponding to an ideal diameter, as utilized herein, is the ability of material, component, and heat treatment (e.g., after quench from an austenitizing temperature), to form at least 50% martensite at the center of a solid cylinder. While the above definition of hardenability corresponding to an ideal diameter is based from a solid component, one of ordinary skill in the art would understand that the geometry is not limited to a solid cylinder and may include other geometries and/or hollow components. For example, the hardenability of hollow components corresponds to the corresponding center depth within the material (e.g., the center of the wall) in which at least 50% martensite forms after heat treatment.

The martensitic microstructure has increased material toughness as compared to bainite and ferrite/pearlite microstructures. Increasing the percentage of martensite in the material microstructure will decrease the FATT of the material. Increasing the ideal diameter of a material increases the amount of martensite thus decreasing the FATT of the material in thicker cross sections. A material at a temperature below the FATT will have low fracture toughness and low damage tolerance. To form a damage tolerant component, the operating temperature of the component should be above the FATT.

In one embodiment, a component formed from the composition, according to the present disclosure, includes a FATT at the surface of less than -40°F (-40°C) or less than -50°F (-45.6°C) or less than -60°F (-51.1°C.). In addition, the component includes a FATT of less than 86°F (30°C) or less than 80°F (26.7°C) or less than 75°F (23.9°C) at the maximum thickness of the component.

In addition to increasing the ideal diameter, properties of the material that decrease FATT include, but are not limited to, increasing martensite percentage, decreasing grain size, decreasing yield strength, or a combination thereof. In one embodiment, a desired yield strength of the material is 650 MPa or greater or about 650 MPa to about 1000 MPa and tensile strength between about 800 and about 1,000 MPa. In a further embodiment, the average grain size of a material is formed during processing of the material, and is maintained to about 62 µm or less or about 50 µm or less. The FATT of the material having a defined yield strength range and grain size range is adjusted through adjustments in microstructure. In one embodiment, the microstructure is adjusted through increases and/or decreases in concentrations of alloying elements. The alloying elements include, but are not limited to, carbon, silicon, manganese, nickel, chromium, molybdenum, vanadium, sulfur, phosphorus, copper, or a combination thereof. In addition to adjusting microstructure, increases and/or decreases in the concentrations of the alloying elements adjust material strength, toughness, ductility, grain size, or a combination thereof.

In one embodiment, the nickel concentration and the chromium concentration are decreased and a carbon concentration and a manganese concentration are increased. A hardenability of a material is affected by the amount of each element present in the material. The hardenability is the ease at which the material forms a martensitic structure during quenching from an austenitizing temperature. Increasing the carbon concentration and the manganese concentration maintains or increases a hardenability of the material. Increasing the hardenability of the material increases the ideal diameter, which increases martensitic structure formation and decreases the FATT in thick cross sections, thus providing for increased damage tolerance.

An exemplary process for forming the component includes forging of the component. After forging, the component is heat treated through methods including, but not limited to, austenitizing, quenching, tempering, or a combination thereof. Austenitizing is the process of holding the martensitic alloy forging above a critical temperature for a sufficient period of time to ensure that the matrix is fully transformed to austenite. In order to produce a single phase matrix microstructure (austenite) with a uniform carbon distribution, austenitizing includes holding the forging at temperatures greater than about 870°C (1598°F) for a time period that is sufficient to fully convert the matrix of the thickest section to austenite. Quenching from the austenitizing temperature forms a martensite microstructure and may be accomplished with any suitable quenching method known in the art. The rate of quench has to be high enough to reduce or eliminate ferrite/pearlite formation. Tempering is provided to increase the toughness and reduce the brittleness of the component. Suitable tempering temperatures include, but are not limited to, between about 550°C (1022°F) and about 650°C (1202°F), between about 580°C (1076°F) and about 620°C (1048°F), or about 600°C (1112°F), or any combination, subcombination, range, or sub-range thereof.

### EXAMPLES

### COMPARATIVE EXAMPLE 1

Comparative Example 1: The known composition of 34CrNiMo6 steel, a material known for use in wind turbine main shaft manufacture, is shown below:

| Comparative Ex. 1 - 34CrNiMo6 | |
|---|---|
| | wt% |
| Carbon | 0.34 |
| Silicon | 0.2 |
| Manganese | 0.65 |
| Nickel | 1.5 |
| Chromium | 1.5 |
| Molybdenum | 0.23 |
| Vanadium | - |
| Iron | Balance |

The nominal composition of Comparative Example 1 corresponds to a hardenability corresponding to an ideal diameter of 18.80 cm (7.4 inches).

### COMPARATIVE EXAMPLE 2

Comparative Example 2: A steel alloy composition having the following composition:

| Comparative Ex. 2 | |
|---|---|
| wt% | wt% |
| Carbon | 0.26 |
| Silicon | 0.23 |
| Manganese | 1.00 |
| Nickel | 0.70 |
| Chromium | 1.10 |
| Molybdenum | 0.25 |
| Vanadium | 0.09 |
| Sulfur | <0.015 |
| Phosphorus | <0.015 |
| Copper | <0.25 |
| Iron | Balance |

The nominal composition of Comparative Example 2 has a hardenability corresponding to an ideal diameter of 15.49 cm (6.1 inches).

### EXAMPLE 1

A martensitic alloy composition having the following composition:

### Example 1

| Element | wt% |
|---|---|
| Carbon | 0.40 |
| Silicon | 0.23 |
| Manganese | 1.10 |
| Nickel | 0.80 |
| Chromium | 1.15 |
| Molybdenum | 0.30 |
| Vanadium | 0.09 |
| Sulfur | - |
| Phosphorus | - |
| Copper | - |
| Iron | Balance |

A component, shown as Example 1 is formed from an exemplary composition according to the present disclosure. The final product includes a hardenability corresponding to an ideal diameter of 12.4 inches (31.50 cm).

### EXAMPLE 2

Example 2: A martensitic alloy composition having the following composition:

### Example 2

| Element | wt% |
|---|---|
| Carbon | 0.43 |
| Silicon | 0.30 |
| Manganese | 1.25 |
| Nickel | 0.90 |
| Chromium | 1.30 |
| Molybdenum | 0.35 |
| Vanadium | 0.12 |
| Iron | Balance |

A component, shown as Example 2, is formed from an exemplary composition, according to the present disclosure. The final product includes a hardenability corresponding to an ideal diameter of 17.3 inches (43.94 cm).

While the invention has been described with reference to a preferred embodiment, it is intended that the invention not be limited to the particular embodiment disclosed as the best mode contemplated for carrying out this invention, but that the invention will include all embodiments falling within the scope of the appended claims.

## Claims

1. A martensitic alloy component, consisting by weight:
0.38% to 0.43% C;
0.15% to 0.30% Si;
1.00% to 1.25% Mn;
0.75% to 0.90% Ni;
1.00% to 1.30% Cr;
0.25% to 0.35% Mo;
0.05% to 0.12% V;
up to 0.015% S;
up to 0.015% P;
up to 0.15% Cu; and
balance iron and incidental impurities;
wherein the component has a hardenability corresponding to an ideal diameter of greater than 25.4 cm (10 inches).

2. The martensitic alloy component of claim 1, wherein the component comprises 1.05 to 1.25% Mn.

3. The martensitic alloy component of claim 1 or claim 2, wherein the component comprises 1.15% Mn.

4. The martensitic alloy component of any preceding claim, wherein the component has a hardenability corresponding to an ideal diameter of from 25.4 to 45.72 cm (10 inches to 18 inches).

5. The martensitic alloy component of claim 4, wherein the component has a hardenability corresponding to an ideal diameter of from 27.94 to 30.48 cm (11 inches to 12 inches).

6. The martensitic alloy component of claim 4, wherein the component has a hardenability corresponding to an ideal diameter of from 33.02 to 35.56 cm (13 inches to 14 inches).

7. The martensitic alloy component of any preceding claim, further comprising a fracture appearance transition temperature at a surface of the component of less than - 40°C.

8. The martensitic alloy component of any preceding claim, further comprising a fracture appearance transition temperature at a maximum thickness of the component of less than 30 °C.

9. The martensitic alloy component of any preceding claim, wherein the martensitic alloy component has a average grain size of less than 62 µm.

10. The martensitic alloy component of any preceding claim, wherein the martensitic alloy component has a yield strength at a surface of the component of greater than 650 MPa.

11. The martensitic alloy component of any preceding claim, wherein the martensitic alloy component has a tensile strength at a surface of the component of between 800 and 1,000 MPa.

12. The martensitic alloy component of any preceding claim, wherein the component has a thickness of greater than 50.8 cm (20 inches).

13. The martensitic alloy component of any preceding claim, wherein the component is a wind turbine shaft.

14. The martensitic alloy component of claim 13, wherein the wind turbine shaft has at least one solid segment and/or at least one hollow segment.

## Patentansprüche

1. Martensitische Legierungskomponente, bestehend aus, in Gewichtsprozent:
0,38 % bis 0,43 % C;
0,15 % bis 0,30 % Si;
1, 00 % bis 1,25 % Mn;
0,75 % bis 0,90 % Ni;
1,00 % bis 1,30 % Cr;
0,25 % bis 0,35 % Mo;
0,05 % bis 0,12 % V;
bis zu 0,015 % S;
bis zu 0,015 % P;
bis zu 0,15% Cu; und
Rest Eisen und zufällige Verunreinigungen;
wobei die Komponente eine Härtbarkeit aufweist, die einem idealen Durchmesser von mehr als 25,4 cm (10 Inch) entspricht.

2. Martensitische Legierungskomponente nach Anspruch 1, wobei die Komponente 1,05 bis 1,25 % Mn umfasst.

3. Martensitische Legierungskomponente nach Anspruch 1 oder Anspruch 2, wobei die Komponente 1,15 % Mn umfasst.

4. Martensitische Legierungskomponente nach einem der vorhergehenden Ansprüche, wobei die Komponente eine Härtbarkeit aufweist, die einem idealen Durchmesser von 25,4 bis 45,72 cm (10 Inch bis 18 Inch) entspricht.

5. Martensitische Legierungskomponente nach Anspruch 4, wobei die Komponente eine Härtbarkeit aufweist, die einem idealen Durchmesser von 27,94 bis 30,48 cm (11 Inch bis 12 Inch) entspricht.

6. Martensitische Legierungskomponente nach Anspruch 4, wobei die Komponente eine Härtbarkeit aufweist, die einem idealen Durchmesser von 33,02 bis 35,56 cm (13 Inch bis 14 Inch) entspricht.

7. Martensitische Legierungskomponente nach einem der vorhergehenden Ansprüche, ferner umfassend eine Brucherscheinungsübergangstemperatur an einer Oberfläche der Komponente von weniger als -40° C.

8. Martensitische Legierungskomponente nach einem der vorhergehenden Ansprüche, ferner umfassend eine Brucherscheinungsübergangstemperatur an einer maximalen Dicke der Komponente von weniger als 30° C.

9. Martensitische Legierungskomponente nach einem der vorhergehenden Ansprüche, wobei die martensitische Legierungskomponente eine durchschnittliche Korngröße von weniger als 62 µm aufweist.

10. Martensitische Legierungskomponente nach einem der vorhergehenden Ansprüche, wobei die martensitische Legierungskomponente eine Streckgrenze an einer Oberfläche der Komponente von größer als 650 MPa aufweist.

11. Martensitische Legierungskomponente nach einem der vorhergehenden Ansprüche, wobei die martensitische Legierungskomponente eine Zugfestigkeit an einer Oberfläche der Komponente zwischen 800 und 1.000 MPa aufweist.

12. Martensitische Legierungskomponente nach einem der vorhergehenden Ansprüche, wobei die Komponente eine Dicke von größer als 50,8 cm (20 Inch) aufweist.

13. Martensitische Legierungskomponente nach einem der vorhergehenden Ansprüche, wobei die Komponente eine Windturbinenwelle ist.

14. Martensitische Legierungskomponente nach Anspruch 13, wobei die Windturbinenwelle mindestens ein Vollsegment und/oder mindestens ein Hohlsegment aufweist.

## Revendications

1. Composant en alliage martensitique, constitué en poids de :
0,38 % à 0,43 % de C ;
0,15 % à 0,30 % de Si ;
1,00 % à 1,25 % de Mn ;
0,75 % à 0,90 % de Ni ;
1,00 % à 1,30 % de Cr ;
0,25 % à 0,35 % de Mo ;
0,05 % à 0,12 % de V ;
jusqu'à 0,015 % de S ;
jusqu'à 0,015 % de P ;
jusqu'à 0,15 % de Cu ; et
le reste étant constitué de fer et d'impuretés accidentelles ;
le composant ayant une trempabilité correspondant à un diamètre idéal supérieur à 25,4 cm (10 pouces).

2. Composant en alliage martensitique selon la revendication 1, le composant comprenant 1,05 à 1,25 % de Mn.

3. Composant en alliage martensitique selon la revendication 1 ou la revendication 2, le composant comprenant 1,15 % de Mn.

4. Composant en alliage martensitique selon l'une quelconque des revendications précédentes, le composant ayant une trempabilité correspondant à un diamètre idéal de 25,4 à 45,72 cm (10 pouces à 18 pouces).

5. Composant en alliage martensitique selon la revendication 4, le composant ayant une trempabilité correspondant à un diamètre idéal de 27,94 à 30,48 cm (11 pouces à 12 pouces).

6. Composant en alliage martensitique selon la revendication 4, le composant ayant une trempabilité correspondant à un diamètre idéal de 33,02 à 35,56 cm (13 pouces à 14 pouces).

7. Composant en alliage martensitique selon l'une quelconque des revendications précédentes, ayant en outre une température de transition correspondant à l'apparence de fractures à une surface du composant qui est inférieure à -40 °C.

8. Composant en alliage martensitique selon l'une quelconque des revendications précédentes, ayant en outre une température de transition correspondant à l'apparence de fractures à une épaisseur maximum du composant qui est inférieure à 30 °C.

9. Composant en alliage martensitique selon l'une quelconque des revendications précédentes, le composant en alliage martensitique ayant une taille de grain moyenne qui est inférieure à 62 µm.

10. Composant en alliage martensitique selon l'une quelconque des revendications précédentes, le composant en alliage martensitique ayant une limite élastique à une surface du composant qui est supérieure à 650 MPa.

11. Composant en alliage martensitique selon l'une quelconque des revendications précédentes, le composant en alliage martensitique ayant une résistance à la traction à une surface du composant qui est de 800 à 1 000 MPa.

12. Composant en alliage martensitique selon l'une quelconque des revendications précédentes, le composant ayant une épaisseur supérieure à 50,8 cm (20 pouces).

13. Composant en alliage martensitique selon l'une quelconque des revendications précédentes, le composant étant un arbre d'éolienne.

14. Composant en alliage martensitique selon la revendication 13, l'arbre d'éolienne comportant au moins un segment solide et/ou au moins un segment creux.
